# EUROPEAN PATENT APPLICATION

(11) **EP 2 953 199 A1**
(43) Date of publication of application: **09.12.2015**
(21) Application number: 13873456.1
(22) Date of filing: 01.02.2013
(51) Int. Cl.: H01M 8/08, H01M 4/46, C25B 5/00, C01B 3/08

(54) **ELECTRICITY GENERATING DEVICE INCLUDING AN ALUMINIUM ALLOY ELECTRODE**

(71) Applicant: Reflectia, S.A., 01012 Vitoria-Gasteiz (Álava) (ES)
(72) Inventor: SALUEÑA BERNA, Xavier, 01012-VITORIA-GASTEIZ (Alava) (ES); MARTINEZ MAEZTU, Rodrigo, 01012-VITORIA-GASTEIZ (Alava) (ES); BORGE BRAVO, Gregorío, 01012-VITORIA-GASTEIZ (Alava) (ES)
(74) Representative: De Pablos Riba, Juan Ramon
(86) International application number: PCT/ES2013/000023
(87) International publication number: WO 2014/118393

(57) **Abstract**

The invention relates to an electricity generating device that can be used as an alectricity generator and as an electricity and hydrogen generator, comprising an aluminium alloy electrode (2), an electrolyte (3) formed by a hydroxid and water solution, and a casing (4) formed by an inner layer (5) of carbon (coal, ghaphite, etc) or conductive paste and an outer layer (6) of conductive metal. The solution can also be water, alcohol and hydroxide; water; salt and hydroxide; water, hydroxid and aluminate; water, alcohol, hydroxide and aluminate: water, salt, hydroxide and aluminate; and can contain a reagent. It is possible for the electrode (2) to be in contact with the inner layer (5) and for said inner layer not to cover all of the outer layer (6). Optionally. The electrode (2) is covered with a liquid-permeable membrane (7).

## Description

### OBJECT OF THE INVENTION

The invention, as stated the title of the present specification, relates to an electricity generating device, which brings, to the function that is intended, several advantages and innovative features, which will be described later, and which represent a remarkable improvement over what is already known in the market for the same purpose.

More particularly, the object of the invention is focused on an electricity generating device which as a cell is configured as a hybrid electricity generating system and hydrogen generator from aluminium and water, controllable according to the impedance, whose characteristics allow size and cost to be lower than the currently known devices and, in addition, it is more sustainable environmentally speaking.

### FIELD OF APPLICATION OF THE INVENTION

The field of application of the present invention falls within the sector of industry dedicated to the manufacture of electricity generating devices, particularly focusing on the field of cells, and more specifically the fuel cells.

### BACKGROUND OF THE INVENTION

As already known, electricity generating systems for vehicles and other apparatuses or portable systems are currently studied.

Conventional electricity generating systems, such as batteries or cells, are very polluting. In the case of batteries, recharging time is high, and in the case of cells its temporary duration is low.

An alternative electricity generating system is the fuel cell. The hydrogen required for the same is usually obtained from fossil fuels. An alternative is its production from metals.

On the other hand, the current hydrogen generating systems from metal only generate hydrogen. In these systems, part of the potential energy from the metal is used in the decomposition of water to obtain hydrogen, to subsequently use this hydrogen in a fuel cell to transform it back into water and electricity. In these processes the performance is, theoretically, about 60%, although in practice it is smaller. In addition, the size of the cells is large, so the cost is high.

In the case of alkaline batteries, the electrode must be very pure and an oxide (solid) is required so that the battery is not polarized, in addition it requires a liquid-permeable membrane that creates an internal resistance which prevents from working with very high intensities. The afore-mentioned oxide often forms part of the container and is consumed with operation, so, in the case of requiring a reactor for electricity generation, its duration would be determined by the amount of oxide attached to it.

As a reference to the current state of the art, it should be noted that it is known the existence of numerous patent records that disclose different types of cells of the type that concerns here, including among them a cell which works with water and aluminium, and where the casing itself is the electrode, but has the disadvantage that requires an oxide to work and its duration is very limited, since it does not allow the replacement of the electrode, and in addition, the oxide needs to be recovered.

Therefore, it must be pointed out that, at least by the applicant, it is unknown the existence of any other electricity generating device or invention or similar application having technical, structural and configuration characteristics similar to those advocated here, as claimed, being the main objective of the same to provide an electricity generating system with lower cost and size that those currently known and, at the same time, it can be used as a fuel cell power system.

### EXPLANATION OF THE INVENTION

Thus, the electricity generating device proposed by the present invention is configured as a significant novelty within their field of application since, in accordance with its implementation and exhaustively, the objectives previously indicated as suitable are satisfactorily reached, the characterizing details being those that distinguish them, suitably set down in the end claims accompanying the present specification.

Concretely, it is proposed by the invention an electricity generating device formed by an electrode made of an aluminium alloy, which is arranged immersed in an electrolyte consisting of a water and sodium or potassium hydroxide, and/or sodium or potassium aluminate based solution, and may be subjected to variations in its composition, said solution being incorporated in a casing formed by an inner layer of carbon (coal, graphite...) and an outer layer of conductive metal.

Optionally, the electrode can be in contact with the inner layer made of coal and, also optionally, a liquid-permeable membrane can be incorporated in order to increase the impedance between the electrode and the electrolyte.

In any of the options, it is also contemplated the possibility of doping carbon of the casing inner layer or adding a reagent to increase the voltage and intensity of the circuit.

The device can be used in two different ways: as an electricity generator or as an electricity and hydrogen generator.

When the device is used as electricity generator is configured as a closed device, like a cell, in which the molarity is low and therefore little hydrogen is generated. It must contain holes, to release the hydrogen produced. The cell could be opened by a thread to allow changing the electrode or electrolyte when these are exhausted, making the cell to be recyclable.

When the device is used as electricity and hydrogen generator is configured as a reactor in which the electrolyte and the electrode are continuously powered to obtain electricity and hydrogen. The hydrogen is used to power a fuel cell.

With all this, the device has the following advantages:
- It allows generating hydrogen and/or electricity depending on the impedance of the external circuit, so that it can be used as method for powering a fuel cell and as a cell at the same time.
- It is able to generate part of the electricity directly in the reactor, with a higher yield than with fuel cells.
- The electrode can be made of impure alloy aluminium, so it can be manufactured with waste from industrial processes. It can be composed of a solid bar, briquette (pressed chip) or pressed aluminium alloy powder.
- The device does not include any inner impermeable membrane, so the generated intensity can be increased and durability is also higher, despite which the battery is not polarized.
- The electrode is not part of the casing, so the circuit can be powered continuously, increasing the durability of the device.
- The casing does not contain polluting elements, its metal and carbon are not consumed, and so the durability of the device increases and facilitates the recycling of the same.
- The device is not discharged when the contact between the electrode and electrolyte is eliminated.
- The electrolyte is liquid, so that impurities and the product of the aluminium reaction do not prevent the electrode reaction.
- The device can work with alkaline solutions such as electrolyte, with molarities lower than those required by the alkaline batteries.
- The residues of the device are easily recyclable, can be transformed back into aluminium and hydroxide using energy input.
- The device is simple and low-cost.

The described electricity generating device thus represents an innovative structure of structural and constitutive characteristics unknown so far to this end, reasons which in combination with its practical utility, provide it with enough basis to obtain the exclusivity privilege which is applied for.

### DESCRIPTION OF THE DRAWINGS

In order to complement the description that is being carried out and with the object to help to a better understanding of the invention, a set of drawings is accompanied to the present specification as an integral part thereof, in which, with an illustrative and non-limiting character, the following has been represented:
Figure 1 shows a schematic and section view of an exemplary embodiment of the electricity generating device object of the invention, appreciating in it the main parts and constitutive elements as well as its arrangement.
Figures 2 y 3 show both schematic and section views of two other exemplary embodiments of the electricity generating device of the invention.
Figure 4 shows a schematic and section view of the electricity generating device of the invention in an operating representation thereof used as an electricity generator.
Figure 5 shows a schematic and section view of the operation of device used as an electricity and hydrogen generator.
Figure 6 shows a schematic and section view of an example of the device used as an electricity generator.

### PREFERRED EMBODIMENT OF THE INVENTION

In light of the previously mentioned figures, and according to the numeration adopted, an example of a preferred and non-limiting embodiment of the invention can be observed therein, which comprises the parts and elements which are indicated and described in more detail below, corresponding each of the numerical references used to the following concepts:
- 1: device
- 2: electrode
- 3: electrolyte
- 4: casing
- 5: inner layer of the casing
- 6: outer layer of the casing
- 7: permeable membrane
- 8: generated hydrogen
- 9: external circuit cable
- 10: thread of the device

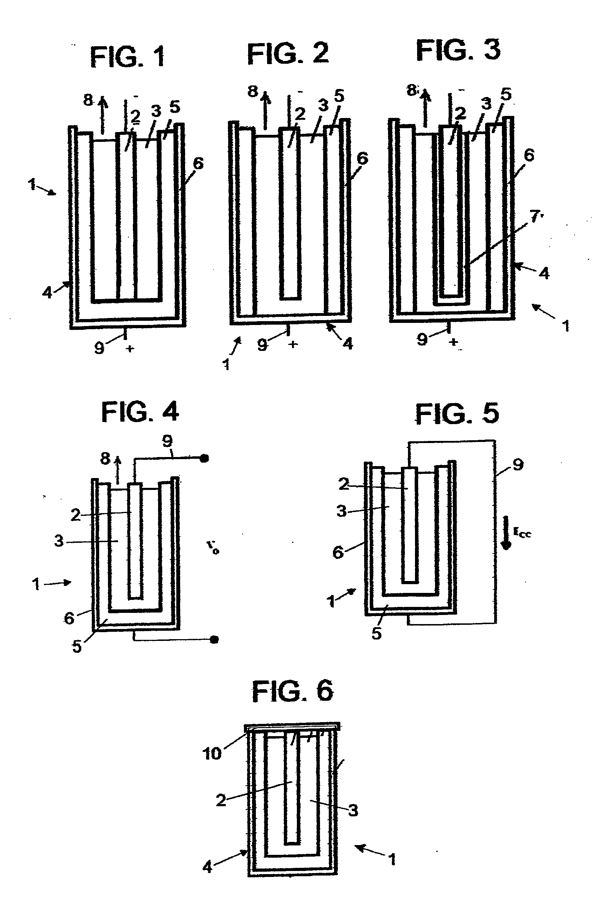

Thus, as seen in Figure 1, the device involved (1) comprises: an aluminium alloy electrode (2); an electrolyte (3) formed by a hydroxide and water solution in which the electrode (2) is immersed; and a casing (4) where the electrolyte (3) is incorporated formed by an inner layer (5) of carbon (coal, graphite...) or conductive paste and a outer layer *(6)* of conductive metal.

Optionally, the solution which constitutes the electrolyte (3) may consist of a water, alcohol and hydroxide solution; water, salt and hydroxide solution; water, hydroxide and aluminate solution; water, alcohol, hydroxide and aluminate solution; or water, salt, hydroxide or aluminate solution. In addition, a reagent such as permanganate, manganate or oxide can be added to such solution.

As can be seen in Figure 1, the electrode (2) may be in contact with the carbon of the inner layer (5) of the casing.

In addition, and as shown in Figure 2, it is not necessary for such inner layer (5) made of carbon to cover the entire outer layer (6), provided that the electrode (2) does not come into contact with such outer layer (6).

Figure 3 shows another exemplary embodiment of the device (1) of the invention in which the electrode (2) is covered by a liquid-permeable membrane (7) in order to increase the impedance between the electrode (2) and the electrolyte (3), thereby increasing the voltage at the expense of reducing the intensity of the current.

In all exemplary embodiments of the invention mentioned above the carbon of the inner layer (5) of the casing (4) can be doped or reagent may be added to increase the voltage and the current.

Thus, the operation of the device (1) is as follows:
The electrode (2), made of an aluminium alloy, reacts by action of hydroxide of the electrolyte (3) by oxidizing the aluminium and giving electrons, forming aluminium hydroxide Al(OH)3.

   Al -> Al⁺³ + 3 e⁻

Aluminium hydroxide forms a layer on the aluminium and, therefore, a resistance to the passage of electrons, in the case of hydrogen production, listed with the reference (8) in figures, it also acts as a resistance. The intensity can move from the electrode (2) to electrolyte (3) along two paths: over the surface of contact between both, or over an external circuit via a cable (9) connected to the conductive metal of the outer layer (6) of the casing (4) and to the carbon of the inner layer (5) through which the electricity obtained circulates.

If the resistance that is in the contact surface between the electrode (2) with electrolyte (3) is less than that in the external circuit (9), gas hydrogen (8) will be formed from water. The potential energy of the metal is used in the electrolysis of water and this intensity is not exploited.

On the other hand, where resistance that exists on the surface of contact of the electrode (2) with the electrolyte (3) is greater than that in the external circuit (9) part of the energy will circulate through the external circuit.

3H⁺ + 3 e⁻ -> 3/2 H₂

The partial reactions are:

Al + 30H⁻ -> Al(OH)₃ + 3e⁻

3H₂O + 3 e⁻ -> 3H⁺ + 30H⁻

The total reaction is:

Al + H₂O -> Al(OH) ₃ + 3/2 H₂ + heat

With high molarity, aluminium hydroxide Al (OH)₃ is transformed into aluminate without electron exchange.

Al (OH)₃+OH⁻ -> Al (OH)₄⁻

In order to verify this theory, in one case, the external circuit (9) has been connected in open circuit (Figure 4) and in short circuit or closed circuit (Figure 5), and it has been observed that, in the first case hydrogen (8) is generated since the external resistance is infinite and therefore the intensity is used in the electrolysis of water, whereas in the second case, it has been observed that hydrogen is not generated, because there is almost resistance over the external circuit (9) and the current flows through this.

The tests carried out can be seen that, in general:
- The intensity increases when increasing the surface of the electrode.
- No-load voltage varies between 0, 9-1, 6 V depending on the molarity of the solution and the purity of the electrode.
- It increases with the molarity of the solution, while generating greater amount of hydrogen and therefore wearing of the electrode.
- It increases when increasing the resistance with a permeable membrane (7) but the intensity decreases.
- The voltage drop as a function of the load decreases as function of the aluminate concentration.

If the device is used as electricity and hydrogen generator (Figure 4), is configured as a reactor in which the electrolyte (3) and electrode (2) are continuously powered to obtain electricity and hydrogen.

If the device is used as electricity generator, is configured as a closed device, like a cell, in which the molarity is low and therefore little hydrogen is generated, provided with holes to release the hydrogen produced (Figure 6). In addition, and preferably, it incorporates a thread (10) to allow the replacement of the electrode (2) and (3) electrolyte when these wear out.

Two examples of construction of the device showing the simplicity of the same are described below

### - Example 1

The most obvious example of the simplicity of this cell or electricity generating device consists of the construction of the cell from a long steel pin, a piece of charcoal (from the barbecue), a container (no matter the material), a piece of aluminium (for example a ring of soft drink) and a water and caustic soda solution.

If in a container with a caustic soda solution we introduce a piece of aluminium attached to a wire and a steel pin attached to another wire, i.e. it is built what would be a typical galvanic battery, and we measure the voltage, it can be seen that this goes down quickly due to the fact that hydrogen covers its surface; the battery is polarized.

If a hole is made in the piece of coal and the pin is inserted tightly repeating the previous operation, it warns that the system is not polarized and the voltage does not decrease. The voltage is approximately 1.2 volts and can move, even a small 0, 7 volts engine. In addition some bubbles, hydrogen, appear on the piece of aluminum that escape into the atmosphere.

### - Example 2

Six steel containers of 30 mm in diameter and 50 mm in height of 1 mm thick are arranged welded to a copper wire (positive terminal) on the wall of which a pressed, adjusted coal dust ring is placed. A soda and aluminate solution is poured inside. As the electrode, six aluminium plates of 0.3 mm thick, 70 mm high and 60 mm wide, folded into three folds to achieve a width of 20 mm, welded to a wire (negative terminal) are used.

The cells in series are attached, with the no-load voltage being 8.7 volts.

Then the terminals are attached to six rechargeable 1.2 volts batteries in parallel, which are charged because their low impedance. The voltage of the rechargeable batteries will serve to regulate the load. The charging time is about 2 minutes.

Then the circuit is powered in parallel to a radio control car with operating voltage 6-7 V.

The car is set in motion at high speed with working voltage of 5.7 volts and intensity of 1.2 A with peaks of 1.58 A, with power of about 5 W for 1 hour, and the hydrogen supplied is considerable.

From several tests, it has been evaluated that, in addition to the power produced, from hydrogen supplied, approximately 0.65 Watts hour per gram of aluminium have been obtained.

Having sufficiently described the nature of the present invention, as well as a way of putting it into practice, it is not considered necessary to make a more extensive explanation in order that any expert in this area will understand its scope and the advantages that can be derived from it, making known that, within reason it could be put into practice in other embodiments differing in detail from that indicated by way of example, and which will obtain the same degree of protection, provided that they do not alter, change, or modify its fundamental principle.

## Claims

1. ELECTRICITY GENERATING DEVICE, which simultaneously generates hydrogen, that can be used as an electricity generator and as an electricity and hydrogen generator, being of the type comprising an electrode (2), an electrolyte (3) and a casing (4), **characterized in that** the electrode (2) is made of aluminium alloy, the electrolyte (3) is formed by a hydroxide and water solution in which the electrode (2) is immersed; and a casing (4) where the electrolyte (3) is incorporated, that is formed by an inner layer (5) of carbon (coal, graphite...) or conductive paste and an outer layer (6) of conductive metal.

2. ELECTRICITY GENERATING DEVICE, according to claim 1, **characterized in that** the electrolyte (3) is formed by a water, alcohol and hydroxide solution.

3. ELECTRICITY GENERATING DEVICE, according to claim 1, **characterized in that** the electrolyte (3) is formed by a water, salt and hydroxide solution.

4. ELECTRICITY GENERATING DEVICE, according to claim 1, **characterized in that** el electrolyte (3) is formed by a water, hydroxide and aluminate solution.

5. ELECTRICITY GENERATING DEVICE, according to claim 1, **characterized in that** el electrolyte (3) is formed by a water, acochol, hyroxide and aluminate solution.

6. ELECTRICITY GENERATING DEVICE, according to claim 1, **characterized in that** el electrolyte (3) is formed by a water, salt, hydroxide and aluminate solution.

7. ELECTRICITY GENERATING DEVICE, according to any of claims 1-6 **characterized in that** to the solution which constitutes the electrolyte (3) is added an active such as permanganate, manganate or oxide.

8. ELECTRICITY GENERATING DEVICE, according to any of claims 1-7, **characterized in that** the electrode (2) is in contact with the inner layer (5) of the casing.

9. ELECTRICITY GENERATING DEVICE, according to any of claims 1-7, **characterized in that** the inner layer (5) og the casing does not cover the entire outer layer (6).

10. ELECTRICITY GENERATING DEVICE, according to any of claims 1-9, **characterized in that** the electrode (2) is coovered by a liquid-permeable membrane (7).

11. ELECTRICITY GENERATING DEVICE, according to any os claims 1-10, **characterized in that** when it is used as electricity and hydrogen generator is configured as a reactor in which the electrolyte (3) and electrode (2) are powered continuously for obtaining electricity and hydrogen.

12. ELECTRICITY GENERATING DEVICE, according to any os claims 1-10, **characterized in that** when it is used as an electricity generator, is configured as a device closed with holes to release the hydrogen produced.

13. ELECTRICITY GENERATING DEVICE, according to claim 12, **characterized in that** it incorporates a thread (10) to allow the replacement of the electrode (2) and the electrolyte (3).

## Amended claims

### Amended claims under Art. 19.1 PCT

**1.** ELECTRICITY GENERATING DEVICE, which simultaneously generates hydrogen, that can be used as an electricity generator and as an electricity and hydrogen generator, being of the type comprising an electrode (2), an electrolyte (3) and a casing (4), **characterized in that** the electrode (2) is made of aluminium alloy, the electrolyte (3) is formed by a hydroxide and water solution in which the electrode (2) is immersed; and a casing (4) where the electrolyte (3) is incorporated, that is formed by an inner layer (5) of carbon (coal, graphite...) or conductive paste and an outer layer (6) of conductive metal.

**2.** ELECTRICITY GENERATING DEVICE, according to claim 1, **characterized in that** the electrolyte (3) is formed by a water, hydroxide and aluminate solution.

**3.** ELECTRICITY GENERATING DEVICE, according to claim 1, **characterized in that** the electrolyte (3) is formed by a water, alcohol, hydroxide and aluminate solution.

**4.** ELECTRICITY GENERATING DEVICE, according to claim 1, **characterized in that** el electrolyte (3) is formed by a water, salt, hydroxide and aluminate solution.

**5.** ELECTRICITY GENERATING DEVICE, according to any of claims 1-4, **characterized in that** to the solution which constitutes the electrolyte (3) is added an active such as permanganate, manganate or oxide.

**6.** ELECTRICITY GENERATING DEVICE, according to any of claims 1-5, **characterized in that** the electrode (2) is in contact with the inner layer (5) of the casing.

**7.** ELECTRICITY GENERATING DEVICE, according to any of claims 1-5, **characterized in that** the inner layer (5) of the casing does not cover the entire outer layer (6).

**8.** ELECTRICITY GENERATING DEVICE, according to any of claims 1-7, **characterized in that** the electrode (2) is covered by a liquid-permeable membrane (7).

**9.** ELECTRICITY GENERATING DEVICE, according to any of claims 1-8, **characterized in that** when it is used as electricity and hydrogen generator is configured as a reactor in which the electrolyte (3) and electrode (2) are powered continuously for obtaining electricity and hydrogen.

**10.** ELECTRICITY GENERATING DEVICE, according to any of claims 1-8, **characterized in that** when it is used as an electricity generator, is configured as a device closed with holes to release the hydrogen produced.

**11.** ELECTRICITY GENERATING DEVICE, according to claim 10, **characterized in that** it incorporates a thread (10) to allow the replacement of the electrode (2) and the electrolyte (3).
